# FASCICULE DE BREVET EUROPEEN

(11) **EP 1 717 604 B1**
(45) Date de publication et mention de la délivrance du brevet: **19.11.2014**
(21) Numéro de dépôt: 06290618.5
(22) Date de dépôt: 10.04.2006
(51) Int. Cl.: G01V 1/28

(54) **Méthode d'interprétation sédimentologique par estimation de différents scénarios chronologiques de mise en place des couches sédimentaires**
Verfahren zur Sedimentationsauswertung mittels Schätzung von unterschiedlichen chronologischen Szenarien beim Aufbau der Sedimentschichten
Sedimentological interpretation method by estimating different chronological scenarios for the laying down of sedimentary layers

(30) Priorité: 29.04.2005 FR 0504464
(43) Date de publication de la demande: 02.11.2006
(73) Titulaire: Institut Français du Pétrole, 92852 Rueil Malmaison Cedex (FR)
(72) Inventeur: Cacas, Marie-Christine, 92500 Rueil-Malmaison (FR)

(56) Documents cités:
- FR-A1- 2 808 336
- US-A- 5 844 799
- US-A1- 2004 267 454
- US-B1- 6 597 995
- QUIQUEREZ A ET AL: "DIBAFILL: a 3-D two-lithology diffusive model for basin infilling" COMPUTERS AND GEOSCIENCES, PERGAMON PRESS, OXFORD, GB, vol. 26, no. 9-10, novembre 2000 (2000-11), pages 1029-1042, XP002319037 ISSN: 0098-3004
- RIVENEAS J C: "APPLICATION OF A DUAL-LITHOLOGY, DEPTH-DEPENDENT DIFFUSION EQUATION IN STRATIGRAPHIC SIMULATION" BASIN RESEARCH, BLACKWELL, OXFORD, GB, vol. 4, 1992, pages 133-146, XP000605803 ISSN: 0950-091X
- LAWRENCE D T ET AL: "STRATIGRAPHIC SIMULATION OF SEDIMENTARY BASINS: CONCEPTS AND CALIBRATION" AAPG BULLETIN - THE AMERICAN ASSOCIATION OF PETROLEUM GEOLISTS BULLETIN, OKLA, US, vol. 74, no. 3, 1 mars 1990 (1990-03-01), pages 273-295, XP000605713

## Description

La présente invention concerne une méthode pour extraire de manière automatique des informations pertinentes pour l'interprétation sédimentologique, dans le but de reconstituer les conditions de dépôts dans lesquels se sont formées des couches de sédiments.

La présente invention comporte une estimation de scénarios chronologiques réalistes de mise en place des couches sédimentaires.

La sédimentologie consiste à reconstituer les environnements dans lesquels se sont formées les différentes roches dont on étudie les échantillons. Le sous-sol est constitué d'un empilement de couches de sédiments déposées en position subhorizontale. La nature des roches qui constituent ces couches peut varier d'une couche à l'autre, notamment en fonction de la profondeur d'eau sous laquelle le sédiment s'est déposé. Ces couches ont une extension latérale limitée car le processus de sédimentation n'affecte pas l'intégralité de la surface terrestre à un instant donné au cours de l'histoire géologique.

La stratigraphie est la branche de la géologie qui étudie l'ordre dans lequel les couches de roches constituant la croûte terrestre se sont formées à travers les temps géologiques, en particulier les roches sédimentaires. Elle permet d'établir une chronologie relative dite "chronologie stratigraphique", notamment par l'utilisation raisonnée de deux principes : une même couche a le même âge sur toute son étendue et de deux couches superposées, la plus basse est la plus ancienne. On aboutit ainsi à des divisions que l'on peut différencier selon la nature des arguments qui servent à les définir : les divisions lithostratigraphiques, les divisions biostratigraphiques et les divisions chronostratigraphiques. Ces dernières sont caractérisées par des ensembles de couches auxquelles on fait correspondre des intervalles de temps (appelés divisions géochronologiques).

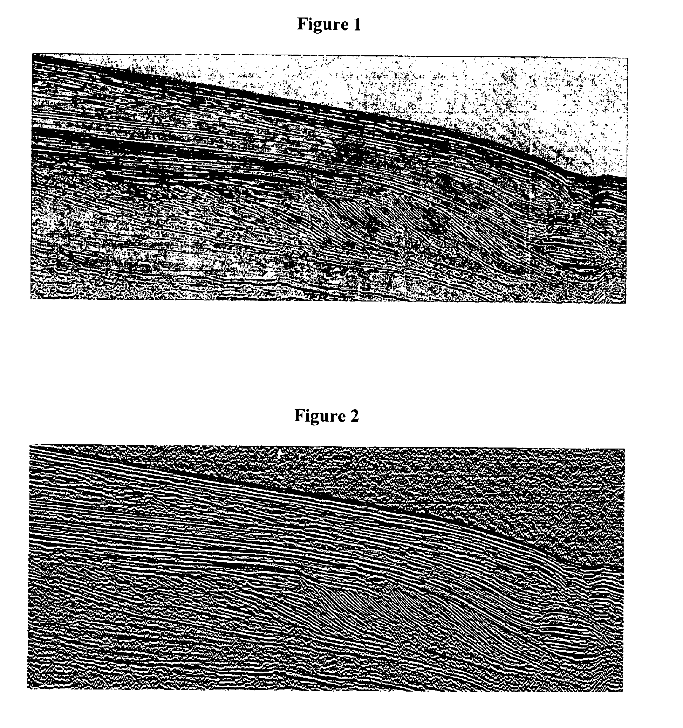

D'autre part, l'imagerie sismique est une méthode d'observation de l'architecture de ces couches. Cette technique repose sur l'émission de signaux acoustiques dans le sous-sol et l'enregistrement des signaux propagés et réfléchis sur des réflecteurs acoustiques particuliers. Ces signaux sont traités pour former une image sismique en deux ou trois dimensions. Cette image sismique est constituée d'une série d'enregistrements verticaux appelés "traces sismiques". Ces traces sismiques représentent l'amplitude du signal reçu en fonction du temps. Les signaux enregistrés corrèlent en général d'une trace à l'autre ce qui se traduit sur une image sismique par des lignes sub-horizontales, plus ou moins rectilignes, épaisses et continues appelées linéations. Ces lignes représentent les interfaces entre des couches sédimentaires. Ainsi, une image sismique bidimensionnelle correspond à une section verticale du sous-sol. Un exemple d'image sismique bidimensionnelle est fourni par la figure 1.

Les couches sédimentaires peuvent être rognées par l'érosion et déformées par l'histoire tectonique du sous-sol, après leur dépôt. Ainsi, l'architecture actuelle des couches, imagées par la sismique, peut atteindre un degré de complexité qui rend la tâche très délicate lorsque l'on cherche à reconstituer l'histoire géologique qu'elles ont subie.

Or, dans le domaine de l'exploration pétrolière, l'un des objectifs de l'interprétation de ces images (appelée stratigraphie sismique) est justement d'analyser l'architecture observée pour reconstituer l'histoire des dépôts sédimentaires, ceci afin de localiser les sédiments qui sont susceptibles de constituer des réservoirs pétroliers. Les critères utilisés pour identifier les couches à hydrocarbures reposent essentiellement sur l'estimation de la position du niveau de la mer au moment de leur dépôt. Par exemple, les sédiments les plus sableux se trouvent en général au niveau des deltas qui se localisent le long des lignes de côte des continents. Ces lignes de côte varient au cours des temps géologiques en fonction de la variation du niveau marin et des mouvements tectoniques tels que la subsidence (affaissement de la croûte terrestre) ou la surrection de chaînes de montagnes.

A partir de l'observation d'image sismique, l'interprétateur dispose de certaines règles, plus ou moins empiriques, pour déterminer la profondeur d'eau sous laquelle un sédiment s'est déposé. Il se base notamment sur l'analyse de la position relative des couches ou encore sur la manière dont ces couches sont organisées entre elles : des couches parallèles peuvent indiquer un dépôt régulier à grande profondeur d'eau, des couches sécantes peuvent indiquer une phase d'émersion intercalée entre les phases de dépôt, etc...

L'interprétation est souvent très délicate et repose entièrement sur l'expertise sédimentologique de l'interprétateur. Il existe très peu d'outils lui permettant de l'assister dans cette tâche, d'autant plus complexe qu'une image sismique montre souvent plusieurs centaines de couches.

### État de la technique

Les principes de base de la stratigraphie sismique, c'est-à-dire de l'interprétation sédimentologique des images sismiques, ont été posés par Vail et al durant les années 70 (Vail P.R., et al, 1977, "Seismic stratigraphy and global changes of sea level", in C.E.Payton ed., "Seismic stratigraphy application to hydrocarbon exploration": American Association of Petroleum Geologists Memoir 26, p.49-212). Les concepts proposés par Vail et al. n'ont guère changé depuis, mais les campagnes d'acquisition sismique, notamment l'acquisition de données sismiques en trois dimensions, se sont beaucoup développées dans le domaine de l'exploration et de la production des hydrocarbures. Leur nombre important exige de diminuer le temps passé par l'interprétateur à traiter ces données.

L'interprétation des données acquises se fait par un interprétateur formé aux principes de la stratigraphie sismique. Étant donné la grande quantité de données à traiter, l'interprétation est réalisée à l'aide de logiciels informatiques dits "stations d'interprétation sismique". On distingue trois catégories de fonctionnalités offertes par ces stations d'interprétation sismique et concernant l'invention:
(1) Des outils permettant une extraction semi-automatique de réflecteurs sismiques à partir d'une "graine" pointée par l'interprétateur sur l'image analysée. Depuis quelques années, des travaux de recherche sont mis en oeuvre pour faire une extraction globale et entièrement automatisée de toutes les interfaces. On peut citer par exemple la méthode du document FR 2 646 520 (US 5 148 494), ou les travaux plus récents décrits dans :
   M. Faraklioti, M. Petrou, "Horizon picking in 3D seismic data volumes", Machine Vision and Applications, vol.15, Numero 4, octobre 2004".
(2) Des outils de calcul d'attributs sismiques (grandeurs scalaires ou vectorielles estimées par traitement mathématique). On peut citer par exemple le rapport public "TriTex IST -1999-20500, Feasability and Litterature study, Novembre 2001" qui présente un état des lieux sur le calcul des attributs dits "de texture", ou encore la revue "The Leading Edge" Octobre 2002, vol.21, numéro 10 présentant un ensemble d'articles traitant du sujet des attributs sismiques.
(3) Des méthodes d'interprétation chronostratigraphique dans lesquelles on estime la chronologie de mise en place des dépôts sédimentaires. On peut citer par exemple la méthode décrite par N.Keskes dans le document FR 2 808 336 (US 6 771 800). Le principe de cette méthode repose sur le calcul d'un champ de vecteur qui s'applique sur l'image et qui décrit en tout point l'orientation locale moyenne des réflecteurs au voisinage de ce point. On calcule ensuite un réseau de lignes tangentes en tout point à ce champ de vecteur, les « lignes de flux ». La densité locale des lignes de flux est alors interprétée en termes de vitesse de sédimentation. On note que cette méthode ne peut pas être mise en oeuvre si l'image de départ correspond à un milieu géologique comportant des discontinuités stratigraphiques telles que des failles, car on ne peut pas faire propager de ligne de flux au travers de ces discontinuités On note aussi que cette méthode ne propose qu'une seule interprétation chronostratigraphique parmi toutes les interprétations possibles ; notamment, elle ne permet pas de proposer une interprétation chronostratigraphique respectant des lignes de flux imposées a priori par l'opérateur.

### La méthode selon l'invention

L'invention concerne une méthode de reconstitution des conditions de dépôts dans lesquels se sont formées des couches de sédiments, à partir de classements chronologiques de réflecteurs formant des lignes des pixels extraits d'une image représentant des amplitudes de signaux sismiques. La méthode est caractérisée en ce qu'elle comporte les étapes suivantes :
A. on effectue de façon itérative une estimation d'un premier et d'un second scénarios chronologiques de mise en place desdites couches de sédiments, en attribuant à chacun desdits réflecteurs deux numéros de niveau chronologique respectivement ***Tᵤₚ*** et ***T_{down}***, déterminés à partir des étapes suivantes :
   a) on attribue un premier numéro initial de niveau chronologique ***Tᵤₚ*** à un premier groupe de réflecteurs, et un second numéro initial de niveau chronologique ***T_{down}*** à un second groupe de réflecteurs ;
   b) on attribue un numéro de niveau chronologique ***Tᵤₚ** = **Tᵤₚ** +* 1 aux réflecteurs constitués de pixels placés au-dessus desdits réflecteurs dudit premier groupe et au-dessus d'aucun autre réflecteur, ces réflecteurs attribués au niveau ***Tᵤₚ** +* 1 constituants les nouveaux réflecteurs dudit premier groupe ;
   c) on attribue un numéro de niveau chronologique ***T_{down}** = **T_{down} -*** 1 aux réflecteurs constitués de pixels placés au-dessous desdits réflecteurs dudit second groupe et au-dessous d'aucun autre réflecteur, ces réflecteurs attribués au niveau ***T_{down} -*** 1 constituants les nouveaux réflecteurs dudit second groupe ;
   d) on réitère à partir de l'étape b), la procédure s'interrompant quand tous les réflecteurs sont attribués à deux niveaux chronologiques.
B. on effectue une interprétation desdits scénarios chronologiques pour reconstituer lesdites conditions de dépôts.

Selon l'invention, l'estimation d'un scénario chronologique peut respecter au moins une contrainte additionnelle imposée par un interprétateur, telle qu'une ligne isochrone particulière qui doit être attribuée à un même niveau chronologique. Une ligne isochrone comporte un ensemble de réflecteurs.

Selon l'invention, les scénarios chronologiques peuvent être interprétés par différentes méthodes tels que celles décrites ci-dessous :
- On peut interpréter lesdits scénarios chronologiques en définissant des zones de faible et forte vitesses de sédimentation à l'aide d'un attribut ***D*** défini comme la différence entre lesdits numéros de niveau chronologique ***Tᵤₚ*** et lesdits numéros de niveau chronologique ***T_{down},*** en chaque pixel de ladite image.
- On peut interpréter lesdits scénarios chronologiques en définissant les interfaces entre des corps sédimentaires dudit milieu souterrain à l'aide d'un attribut ***D'*** calculé en tout pixel d'un réflecteur, et défini comme étant la différence entre la valeur de ***D*** du réflecteur passant par ledit pixel et la valeur de ***D*** d'un réflecteur placé juste au-dessus ou en-dessous dudit réflecteur, au droit dudit pixel considéré.
- On peut interpréter lesdits scénarios chronologiques en déterminant une position d'une ligne isochrone pour un niveau chronologique donné numéroté **Tᵢₛₒ***,* ainsi qu'une fourchette d'incertitude sur ladite position, en affichant lesdits réflecteurs suivant trois codes de couleurs différents, correspondant à trois domaines différents définis comme suit :
   - tous réflecteurs dont le numéro du niveau chronologique ***Tᵤₚ*** est postérieur au numéro du niveau recherché ***Tᵢₛₒ*** (***Tᵤₚ** > **Tᵢₛₒ***) constituent le domaine I ;
   - tous réflecteurs dont le numéro du niveau chronologique ***T_{down}*** est antérieur au numéro du niveau recherché ***Tᵢₛₒ*** (***T_{down}** < **Tᵢₛₒ***) constituent le domaine II ;
   - tous les réflecteurs qui peuvent potentiellement s'être déposés au niveau recherché (***Tᵤₚ** < **Tᵢₛₒ** < **T_{down}***) constituent le domaine III, qui est le domaine d'incertitude.

L'invention peut également s'appliquer à une image en trois dimensions. Dans ce cas, l'image peut être définie par un premier ensemble de sections et un second ensemble de sections perpendiculaires, l'estimation de scénarios chronologiques pouvant alors comprendre les étapes suivantes :
- on définit une sélection de sections dudit premier et dudit second ensemble de sections ;
- on construit des lignes isochrones en rassemblant des réflecteurs qui se croisent sur des lignes d'intersection entre des sections perpendiculaires de ladite sélection ;
- on effectue une estimation desdits scénarios chronologiques sur l'ensemble des réflecteurs extraits de toutes les sections considérées, en respectant comme contrainte lesdites lignes isochrones.

Enfin, selon l'invention, l'extraction desdits réflecteurs peut comporter au moins une fois la succession des étapes suivantes :
1) on réalise une transformation de ladite image en une image comportant seulement deux niveaux de couleurs ;
2) on effectue une modification de ladite image à deux niveaux de couleurs en transformant des linéations de ladite image en des lignes qui conservent les mêmes relations de voisinage et dont l'épaisseur est celle d'un pixel, à partir d'une opération de morphologie mathématique.
3) on construit lesdits réflecteurs en découpant chacune desdites lignes présentant des ramifications à partir d'une technique de vectorisation ;
4) on effectue une optimisation de la géométrie desdits réflecteurs, cette optimisation pouvant comporter au moins une des étapes suivantes :
   a) on sépare des réflecteurs ayant une extrémité commune, et l'on teste deux à deux ces réflecteurs pour sélectionner des couples de réflecteurs dont les orientations à l'extrémité font un angle de 180°, avec un certain seuil de tolérance, par exemple 20°, puis l'on ressoude parmi les couples sélectionnés, le couple qui formera, après soudure, le réflecteur le plus long.
   b) on élimine des réflecteurs ayant au moins une des caractéristiques suivantes : une faible longueur par rapport à la longueur moyenne des réflecteurs, une tortuosité supérieure à la tortuosité moyenne, une orientation moyenne proche de la verticale ;
   c) on coupe certains réflecteurs pour que chacun d'eux représente une ligne brisée ne présentant ni de point de rebroussement, ni de bifurcation, et ne recoupant aucun autre réflecteur.

D'autres caractéristiques et avantages de la méthode selon l'invention, apparaîtront à la lecture de la description ci-après d'exemples non limitatifs de réalisations, en se référant aux figures annexées et décrites ci-après.

### Présentation succincte des figures

- la figure 1 montre un exemple d'image sismique bidimensionnelle.
- la figure 2 montre le résultat de l'opération de "binarisation" appliquée à l'image de la figure 1.
- la figure 3 montre l'image de la figure squelettisée.
- la figure 4 illustre le résultat final de vectorisation de l'image de la figure 3.
- la figure 5 schématise les étapes de la détermination de la chronologie suivant une stratégie "au plus tôt".
- la figure 6 présente les réflecteurs aux niveaux chronologiques auxquels ils sont attribués suivant la stratégie "au plus tôt".
- la figure 7 présente les réflecteurs aux niveaux chronologiques auxquels ils sont attribués suivant la stratégie "au plus tard".
- la figure 8 illustre l'incertitude sur le positionnement des réflecteurs dans l'échelle chronologique en associant à chaque réflecteur une valeur de D.
- la figure 9 montre des interfaces entre corps sédimentaires en associant à chaque réflecteur une valeur de ***D'***.
- la figure 10 illustre la recherche de lignes "isochrones" en affichant les réflecteurs suivant trois codes de couleurs différents.
- la figure 11 montre une configuration schématique illustrant la contrainte de la procédure par une ou plusieurs lignes isochrones particulières.
- la figure 12 illustre l'extension de l'invention à des images en trois dimensions.

### Description détaillée de la méthode

La méthode selon l'invention s'applique à une image sismique. Une image sismique est une représentation spatiale, horizontalement, et temporelle, verticalement, des amplitudes des signaux acoustiques enregistrés. Ces amplitudes corrèlent en général d'une trace à l'autre ce qui se traduit sur les pixels constituant l'image sismique par des linéations, c'est-à-dire des lignes sub-horizontales, plus ou moins rectilignes, épaisses et continues. Ces linéations représentent les interfaces entre des couches sédimentaires. Diverses échelles de couleurs sont classiquement utilisées pour représenter ces variations d'amplitudes sur une image. Une image sismique bidimensionnelle représente une section sismique verticale du sous-sol à l'aide d'une échelle de couleur continue (niveaux de gris par exemple) ou non continue.

La méthode selon l'invention a pour but, à l'aide de traitements d'images, d'extraire, de manière automatique, des informations pertinentes pour l'interprétation sédimentologique, dans le but de reconstituer les conditions de dépôts dans lesquels se sont formées des couches de sédiments.

Cette méthode comporte une estimation de différents scénarios chronologiques réalistes (plausibles) de mise en place des couches sédimentaires. L'interprétation de ces scénarios chronologiques permet d'affiner l'interprétation sédimentologique.

### 1- Estimation de scénarios chronologiques

Selon l'invention, l'estimation de scénarios chronologiques comporte un classement de réflecteurs correspondant aux interfaces entre des couches sédimentaires repérées par l'imagerie sismique. Ces réflecteurs constituent un ensemble de pixels formant une ligne. Il faut donc, préalablement à cette estimation, extraire des réflecteurs d'une image sismique.

### Extraction de réflecteurs

Il existe de nombreuses techniques pour extraire des réflecteurs d'une image sismique, bien connues de l'homme du métier, telles que celles permettant une extraction semi-automatique de réflecteurs sismiques à partir d'une "graine" pointée par l'interprétateur sur l'image analysée. On peut citer par exemple la méthode du document FR 2 646 520 (US 5 148 494), ou les travaux plus récents décrits dans :
M. Faraklioti, M. Petrou, "Horizon picking in 3D seismic data volumes", Machine Vision and Applications, vol.15, Numero 4, octobre 2004".

Dans le cadre de la méthode, on propose une nouvelle technique basée sur des techniques de morphologie mathématiques et de vectorisation. Cette méthode d'extraction de réflecteur selon l'invention est décrite ci-après.

### Extraction de réflecteurs par vectorisation de l'image sismique.

Les réflecteurs selon l'invention se définissent comme des lignes sans bifurcation, ne se recoupant pas entre elles, et ne présentant pas de changement de direction droite à gauche vers gauche à droite ou inversement. Ces réflecteurs correspondent aux interfaces entre des couches sédimentaires repérées par l'imagerie sismique.

La vectorisation de l'image sismique comporte les étapes suivantes :

E1. On représente l'image sismique à l'aide d'une échelle continue, par exemple en niveau de gris (figure 1). On transforme cette image en une image binaire de même taille, c'est-à-dire ne présentant plus que deux niveaux de couleurs (noir et blanc par exemple). On parle alors d'une opération de "binarisation" de l'image, et d'image "binarisée". Cette opération est une opération classique d'analyse d'image pour laquelle on dispose de nombreuses méthodes telle que celle proposée dans le document suivant :
Russ, J.C., The Image Processing Handbook., Second ed. 1995, Boca Raton, Florida: CRC Press

Il est par exemple possible d'utiliser une technique de seuillage bien connue de l'homme du métier, qui consiste à définir un ou plusieurs seuils, et d'attribuer à chaque pixel une valeur ou une autre en fonction de son niveau de couleur initial par rapport à ces seuils. L'opération de "binarisation" a été appliquée à l'image de la figure 1, et le résultat est présenté sur la figure 2.

Dans cet exemple, l'opération de binarisation est effectuée de la manière suivante : à chaque pixel de l'image initiale, on considère l'ensemble des valeurs d'amplitude prises par tous les pixels d'une colonne de 20 pixels centrée sur le pixel considéré. Si l'amplitude du pixel analysé se trouve parmi les 30% d'amplitudes les plus basses de cette colonne, la valeur binarisée est mise à 1 ; elle est mise à 0 sinon.

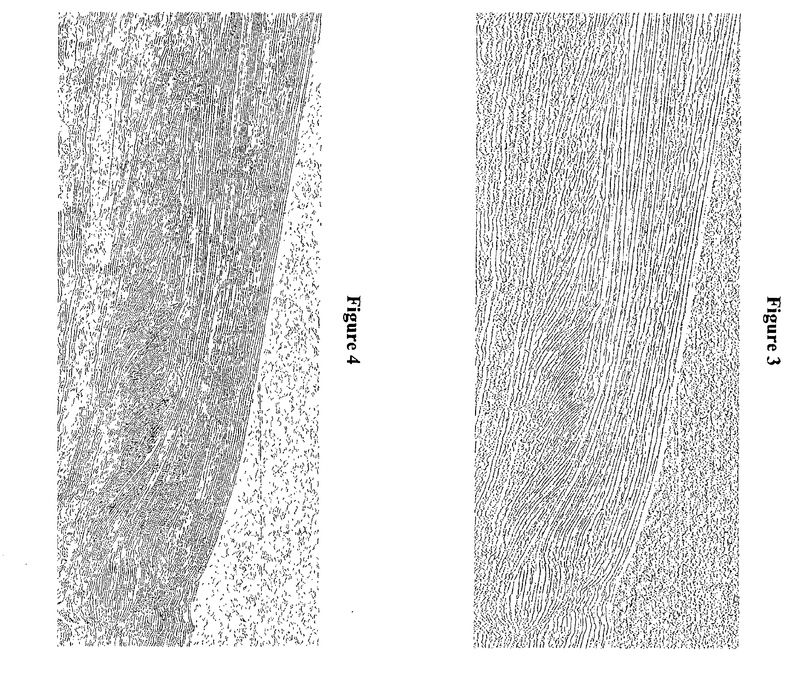

E2. L'image "binarisée", ou l'image de départ si elle était déjà "binarisée", est à son tour transformée en une image binaire de même dimension, dite "image squelettisée", dans laquelle chaque linéations (ensemble de pixels de l'image ayant la même couleur) d'une couleur de l'image de départ est ramenée à une ligne brisée, éventuellement ramifiée, ayant la même topologie (les mêmes relations de voisinage) que la linéation de départ. Il s'agit d'une opération classique de morphologie mathématique. On pourra par exemple se reporter à l'article de T.Y.Zhang et C.Y.Suen: "A fast parallel algorithm for thinning digital patterns," Commun. ACM, Vol 27, pp.236-239, 1984. C'est la méthode qui a été utilisée pour traiter les linéations de couleur noire de la figure 2. Le résultat est présenté sur la figure 3.

E3. L'image "squelettisée" est ensuite vectorisée : chaque ligne brisée présentant des ramifications est découpée en réflecteurs, décrits par la succession des pixels qui le constituent. Par définition, les réflecteurs ainsi obtenus ne comportent aucune ramification et possèdent deux extrémités, dont une au moins est en contact avec un autre réflecteur de la ligne brisée.

E4. Quand plusieurs réflecteurs ont une extrémité commune, on sépare ces réflecteurs, puis l'on en sélectionne deux parmi cet ensemble, pour les souder. Pour ce faire, on calcule l'orientation de chacun des réflecteurs à son extrémité en contact. On teste ensuite les réflecteurs deux à deux pour conserver les couples de réflecteurs dont les orientations à l'extrémité font un angle de 180°, avec un certain seuil de tolérance. Un seuil acceptable est par exemple 20°. Parmi les couples retenus, on sélectionne celui qui formera, après soudure, le réflecteur le plus long. Cette stratégie permet de former des réflecteurs longs et peu tortueux.

E5. L'ensemble des réflecteurs obtenus est nettoyé, en éliminant les réflecteurs qui ont le plus de chance de provenir d'artefacts. Il s'agit par exemple de réflecteurs présentant au moins une des caractéristiques suivantes : faible longueur par rapport à la longueur moyenne des réflecteurs, tortuosité supérieure à la tortuosité moyenne, orientation moyenne proche de la verticale. La figure 4 illustre le résultat final de vectorisation de l'image de la figure 3.

E6. Enfin, les réflecteurs sont sectionnés en deux réflecteurs aux niveaux de leurs points de rebroussement, c'est-à-dire lorsqu'ils passent d'une direction allant de la droite de l'image vers la gauche de l'image à une direction allant de la gauche de l'image vers la droite de l'image, ou inversement.

Les étapes E4, E5 et E6 constituent une optimisation de la définition des réflecteurs.

Pour une image sismique ayant une échelle de couleurs non continue, il est nécessaire d'appliquer les étapes E1 à E6 autant de fois qu'il y a de couleurs, en traitant les linéations d'une couleur particulière les unes après les autres. Par exemple, si l'image sismique est représentée à l'aide d'une échelle ayant trois couleurs non continues C1, C2 et C3, on binarise cette image une première fois pour transformer les linéations de la couleur C1 en réflecteurs, puis l'on applique les étapes E2 à E6 pour déterminer les réflecteurs correspondant aux linéations de couleur C1. Puis l'on binarise à nouveau l'image pour transformer les linéations de couleur C2, et l'on applique à nouveau les étapes E2 à E6 pour déterminer les réflecteurs correspondant aux linéations de couleurs C2. Enfin on effectue la même itération pour la dernière couleur C3.

Cependant, dans un cadre général, un interprétateur travaille sur une station d'interprétation, et il connaît donc la valeur des amplitudes sismiques. Ainsi, pour appliquer la méthode, on utilise systématiquement une conversion des amplitudes en niveaux de gris. En revanche l'utilisation d'une image préalablement colorisée (telle qu'une image scannée par exemple) peut nécessiter l'application de la méthode itérative décrite ci-dessus.

### Classement des réflecteurs par ordre chronologique de mise en place.

Pour un souci de clarté, l'ensemble de la méthode est décrit en deux dimensions. L'extension en trois dimensions est présentée en fin de description.

Par construction, les réflecteurs peuvent éventuellement être en contact par leur extrémité, mais ne peuvent en aucun cas être sécants. De même, toujours par construction et grâce à l'étape 6 de la procédure décrite ci-dessus, un réflecteur est soit au-dessus soit en-dessous d'un autre réflecteur, mais ne peut en aucun cas être à la fois au-dessus et en-dessous. On peut donc construire un ordre chronologique de mise en place des réflecteurs, sachant qu'un réflecteur placé en-dessous d'un autre réflecteur correspond à un sédiment déposé antérieurement à ce dernier.

Un ordre chronologique est décrit par un ensemble discret de niveaux chronologiques successifs. Un niveau chronologique représente un intervalle de temps pendant lequel se mettent en place des sédiments et donc des réflecteurs. Les réflecteurs appartenant à un même niveau chronologique ne peuvent pas être considérés comme étant au-dessous ou au-dessus les uns des autres ; ils sont tous au même niveau, dit "niveau chronologique".

Une chronologie est donc une discrétisation arbitraire du temps. Il existe donc en général plusieurs chronologies possibles pour une configuration donnée de réflecteurs. Selon la méthode, on recherche des chronologies les plus "compactes" possible, c'est-à-dire comportant le moins possible de niveaux chronologiques. On cherche ainsi à placer le plus possible de réflecteurs dans un même niveau chronologique. On pourrait à l'inverse établir des chronologies dans lesquelles on attribue un niveau chronologique par réflecteur.

Parmi ces chronologies compactes, on en détermine deux qui correspondent à des situations extrêmes : une première chronologie est obtenue en supposant que chaque réflecteur se dépose le plus tôt possible au cours de la formation du milieu (on leur attribue un numéro de niveau chronologique ***Tᵤₚ***); la seconde est obtenue en supposant que chaque réflecteur se dépose le plus tard possible (on leur attribue un numéro de niveau chronologique ***T_{down}***).

Pour ce faire, et pour la chronologie dite "au plus tôt", on choisit un groupe initial de réflecteurs auxquels on attribue un numéro initial de niveau chronologique *Tᵤₚ*. Ces réflecteurs étant associés à un même niveau chronologique, ils constituent une ligne isochrone. Ensuite, on détermine l'ensemble des réflecteurs qui sont entièrement juste au-dessus des réflecteurs déjà attribués, c'est-à-dire ayant le numéro de niveau chronologique *Tᵤₚ* = 0. Un réflecteur étant "entièrement" au-dessus d'un autre réflecteur si tous ses pixels qui le constituent sont au-dessus de l'autre réflecteur. "Juste au-dessus" signifie qu'il n'existe pas d'autre réflecteur entre les deux réflecteurs considérés : il s'agit donc des réflecteurs constitués de pixels placés au-dessus desdits réflecteurs attribués et au-dessus d'aucun autre réflecteur. A tous ces réflecteurs entièrement juste au-dessus d'un réflecteur déjà attribué, on attribue un numéro de niveau chronologique incrémenté de un par rapport au réflecteur déjà attribué situé juste au-dessous *Tᵤₚ = Tᵤₚ* + 1. Puis on recommence cette opération en recherchant l'ensemble des réflecteurs qui sont entièrement juste au-dessus d'un réflecteur dernièrement attribué, c'est-à-dire ayant le numéro de niveau chronologique *Tᵤₚ* = *Tᵤₚ +* 1.

De même, et pour la chronologie dite "au plus tard", on choisit un groupe initial de réflecteurs auxquels on attribue un numéro initial de niveau chronologique *T_{down}.* Ces réflecteurs étant associés à un même niveau chronologique, ils constituent une ligne isochrone. Ensuite, on détermine l'ensemble des réflecteurs qui sont entièrement juste au-dessous des réflecteurs déjà attribués, c'est-à-dire ayant le numéro de niveau chronologique *T_{down} = P.* A tous ces réflecteurs entièrement juste au-dessous d'un réflecteur déjà attribué, on attribue un numéro de niveau chronologique décrémenté de un par rapport au réflecteur déjà attribué situé juste au-dessus *T_{down}* = *T_{down}* - 1. Puis on recommence cette opération en recherchant l'ensemble des réflecteurs qui sont entièrement juste au-dessous d'un réflecteur dernièrement attribué, c'est-à-dire ayant le numéro de niveau chronologique *T_{down}* = *T_{down}* - 1.

Ces opérations sont réitérées jusqu'à ce que tous les réflecteurs soient affectés à un niveau chronologique "au plus tard" et à un niveau chronologique "au plus tôt".

Un exemple d'algorithme permettant de déterminer ces deux chronologies est présenté ci-après.

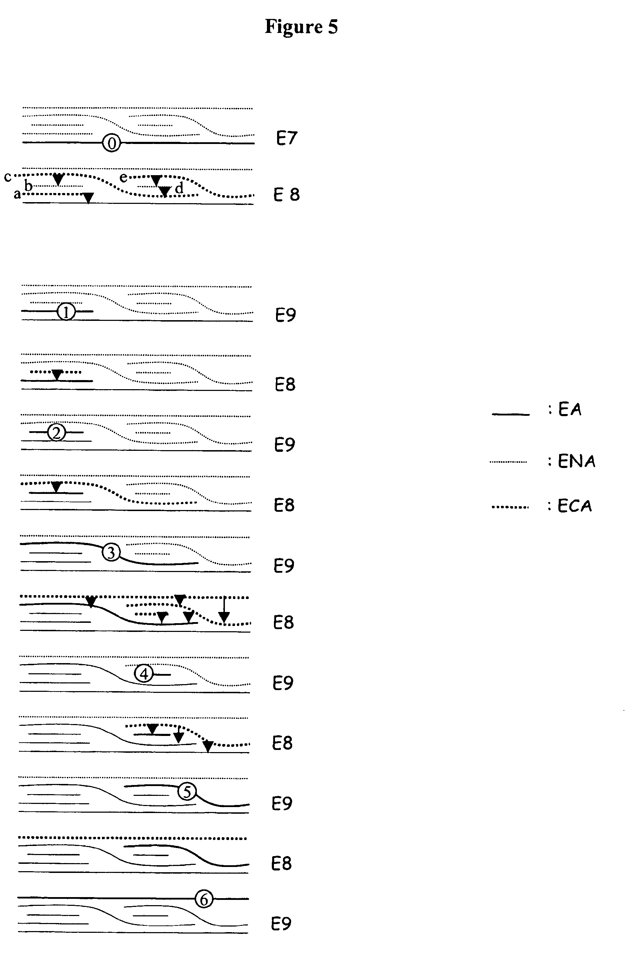

Selon un mode de réalisation, la détermination de la chronologie suivant une stratégie "au plus tôt" comprend les étapes suivantes (E7 - E10) qui sont schématisées sur l'exemple de la figure 5 avec :
- EA : éléments déjà attribués à un niveau chronologique ;
- ENA : éléments non-encore attribués ;
- ECA : éléments candidats à une attribution ;
- *a, c* et *e* des réflecteurs candidats à une attribution de niveau chronologique (ECA) ;
- *b* et *d* des réflecteurs non encore attribués (ENA).

E7. On choisit un groupe de réflecteurs (EA) auquel on attribue un numéro de niveau chronologique de rang *Tᵤₚ*=0 (0). Par défaut, on peut par exemple choisir l'ensemble des réflecteurs placés à la base de l'image, c'est-à-dire n'ayant aucun réflecteur au-dessous.

E8. On recherche tous les réflecteurs ayant au moins un pixel (généralement une portion de réflecteur) placé juste au-dessus des réflecteurs précédemment attribués à un niveau chronologique (EA). Sur l'exemple de la figure 5 il s'agît des réflecteurs *a, c* et *e*. Ces réflecteurs sont alors des réflecteurs candidats à une attribution de niveau chronologique (ECA). Les réflecteurs *b* et *d* ne conviennent pas, car il existe des réflecteurs entre eux (c'est-à-dire l'ensemble de leurs pixels) et le réflecteur attribué au niveau chronologique de rang *Tᵤₚ* = 0. Ces réflecteurs ne sont pas candidats à une attribution et ils sont non encore attribués (ENA).

E9. On parcourt, suivant une cascade descendante (vers le bas de l'image), tous les réflecteurs placés en-dessous des réflecteurs trouvés à l'étape E8, jusqu'à ne trouver que des réflecteurs dont les réflecteurs immédiatement au-dessous sont déjà affectés à un niveau chronologique. Les réflecteurs trouvés de cette manière sont affectés au niveau chronologique de rang *Tᵤₚ* = *Tᵤₚ* + 1. En se référant à la figure 5, la méthode fonctionne ainsi :
- le réflecteur *c* est au-dessus du réflecteur *b* qui est un réflecteur non-attribué ;
- le réflecteur *b* est au-dessus du réflecteur *a* qui est non attribué ;
- le réflecteur *e* est au-dessus du réflecteur *d* qui est non-attribué ;
- le réflecteur *d* est au-dessus du réflecteur *c* qui est non attribué ;
- ainsi, seul le réflecteur *a* peut être attribué.

E10. On réitère à partir de l'étape E8. La procédure s'interrompt quand tous les réflecteurs sont affectés à un niveau chronologique. Les réflecteurs précédemment attribués n'étant plus ceux de rang *Tᵤₚ* = 0 mais ceux de rang *Tᵤₚ* = *Tᵤₚ* + 1.

On calcule ainsi le nombre ***P*** de niveaux chronologiques qui ont été nécessaires pour classer tous les réflecteurs. Sur l'exemple de la figure 5, on a *P* = 6.

Les étapes E8 et E9 permettent concrètement de déterminer l'ensemble des réflecteurs qui sont entièrement juste au-dessus d'un réflecteur déjà attribué. L'ensemble des réflecteurs devant s'interpréter comme l'ensemble des pixels constituants le réflecteur.

Selon le même mode de réalisation, on détermine également la chronologie "au plus tard" en procédant comme pour la stratégie "au plus tôt", mais en se propageant dans l'image de haut en bas au lieu de bas en haut :

E11. On choisit un groupe de réflecteurs (EA) auquel on attribue un numéro de niveau chronologique de rang *T_{down}* = *P* par exemple. Par défaut, on peut par exemple choisir l'ensemble des réflecteurs placés en haut de l'image, c'est-à-dire n'ayant aucun réflecteur au-dessus.

E12. On recherche tous les réflecteurs ayant au moins un pixel (généralement une portion de réflecteur) placé juste en-dessous des réflecteurs précédemment attribués à un niveau chronologique (EA).

E13. On parcourt, suivant une cascade ascendante (vers le haut de l'image), tous les réflecteurs placés au-dessus des réflecteurs trouvés à l'étape E12, jusqu'à ne trouver que des réflecteurs dont les réflecteurs immédiatement au-dessus sont déjà affectés à un niveau chronologique. Les réflecteurs trouvés de cette manière sont affectés au niveau chronologique de rang *T_{down}* = *T_{down}* -1.

E14. On réitère à partir de l'étape E12. La procédure s'interrompt quand tous les réflecteurs sont affectés à un niveau chronologique. Les réflecteurs précédemment attribués n'étant plus ceux de rang *T_{down}* = P mais ceux de rang *T_{down}* = *T_{down}* - 1.

Notons que l'ensemble des étapes 7 à 10 et l'ensemble des étapes 11 à 14 peuvent être intervertis.

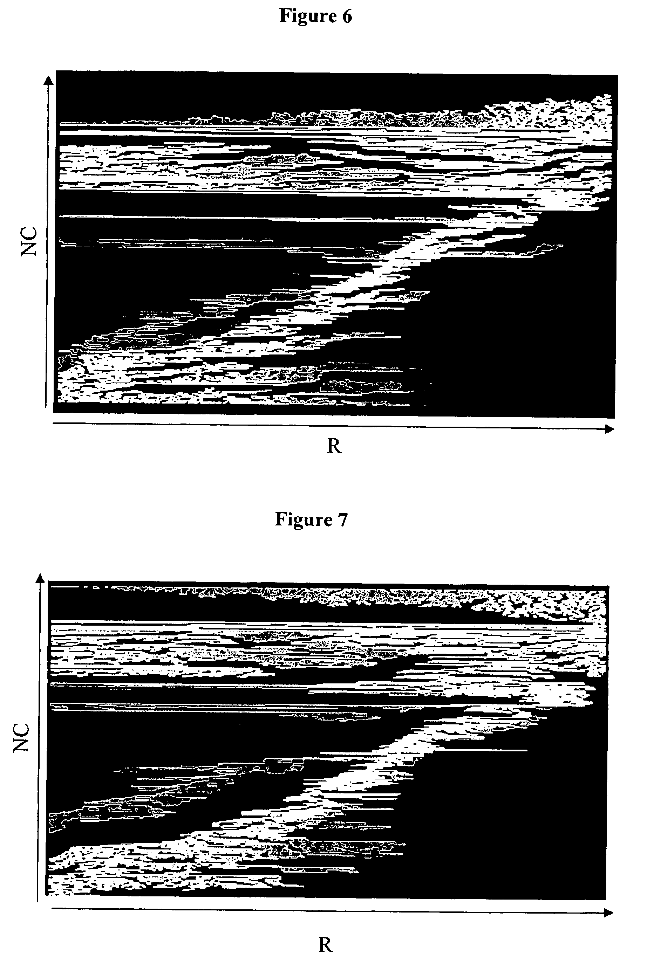

A la fin de l'étape de vectorisation, chaque réflecteur est affecté à un numéro de niveau chronologique "au plus tôt" (noté ***Tᵤₚ*)** et à un numéro de niveau chronologique "au plus tard" (noté ***T_{down}*).** Les figures 6 et 7 présentent les réflecteurs aux niveaux chronologiques auxquels ils sont attribués, suivant les deux stratégies "au plus tôt" et "au plus tard".

Selon un mode particulier de réalisation, la méthode de construction d'une chronologie selon l'invention peut être modifiée pour respecter des contraintes additionnelles imposées par l'interprétateur. Ce dernier peut en effet contraindre la procédure à respecter une ou plusieurs lignes isochrones particulières, chacune étant constituée par un ensemble de réflecteurs spécifiés par l'interprétateur, à attribuer au même niveau chronologique. On rappelle que la méthode estime deux chronologies parmi les chronologies les plus compactes et selon les stratégies d'empilement "au plus tôt" et "au plus tard". En imposant quelques lignes isochrones supplémentaires, l'utilisateur peut construire des chronologies moins compactes, s'il possède des arguments pour imposer à certains réflecteurs d'appartenir au même niveau chronologique.

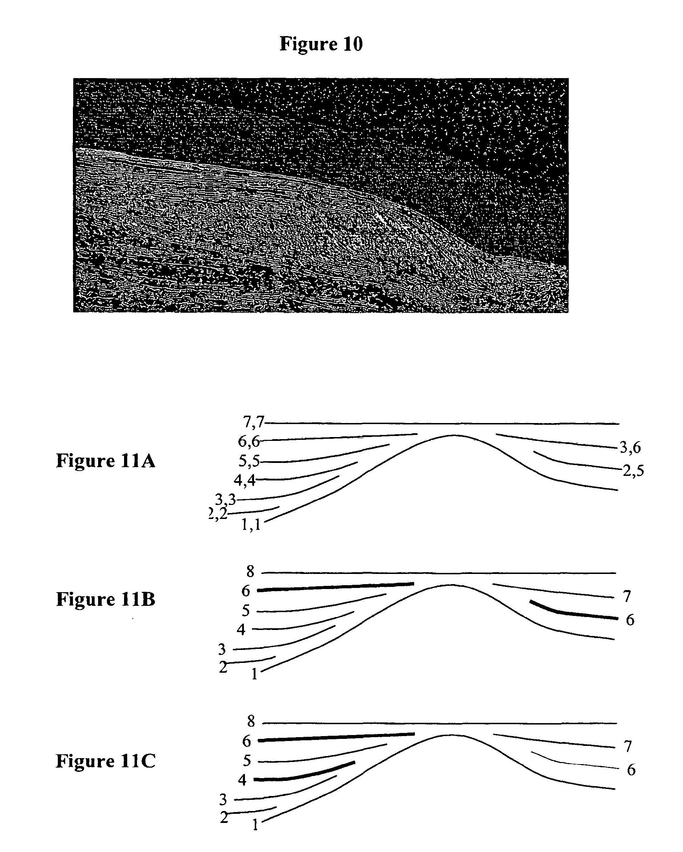

Ceci est explicité par la configuration schématique des figures 11A, 11B et 11C. Les niveaux chronologiques au plus tôt et au plus tard sont respectivement indiqués sur ces schémas : par exemple "2,5" indique que le réflecteur désigné est attribué au niveau chronologique 2 avec la stratégie "au plus tard" et au niveau 5 avec la stratégie "au plus tôt"). Il s'agit d'un classement chronologique à 7 niveaux, dans lequel les réflecteurs de droite sont attribués aux mêmes niveaux chronologiques que les réflecteurs de gauche. Le schéma de la figure 11B indique une chronologie "au plus tôt" dans laquelle on a contraint les deux réflecteurs indiqués en gras à être attribués au même niveau chronologique. On obtient alors une chronologie moins compacte, puisqu'elle comporte 8 niveaux au lieu de 7, dans laquelle le paquet de droite se dépose après le paquet de gauche. Les chronologies "au plus tôt" et "au plus tard" sont alors identiques.

Afin de prendre en compte une contrainte de ce type, la méthode selon l'invention est modifiée de la manière suivante : dans les étapes E9 et E13 de la procédure décrite ci-dessus, les réflecteurs ne sont attribués au niveau *Tᵤₚ* = *Tᵤₚ* + 1 (respectivement *T_{down}* = *T_{down}* - 1) que si tous les réflecteurs appartenant à leur isochrone sont susceptibles d'être attribués au niveau chronologique courant. Autrement dit, si tous les réflecteurs d'une isochrone donnée remplissent les conditions pour être attribués au niveau chronologique *Tᵤₚ = Tᵤₚ +* 1 (respectivement *T_{down}* = *T_{down}* - 1), alors ils lui sont attribués. Dans le cas contraire, on attendra le prochain passage par l'étape E9 (ou E13) pour recommencer le test, et ainsi de suite jusqu'à ce que la condition soit respectée pour tous les réflecteurs de l'isochrone qui seront attribués simultanément au même niveau chronologique *Tᵤₚ* = *Tᵤₚ +* 1.

Si à l'étape E9 (ou E13) aucun réflecteur ne satisfait les conditions pour être attribué à un niveau chronologique alors qu'il reste des réflecteurs non attribués, ceci signifie que la contrainte ne peut pas être respectée sans violer le postulat suivant lequel un réflecteur placé au-dessus d'un autre réflecteur correspond à un dépôt ultérieur. Ce cas de figure est présenté sur le schéma de la figure 11C : les réflecteurs indiqués en trait gras ne peuvent pas être attribués au même niveau chronologique.

Cette possibilité de "forçage" du classement chronologique par des lignes isochrones imposées par l'utilisateur peut permettre à celui-ci de raffiner progressivement son interprétation, en alternant ajout d'une ligne isochrone et remise à jour des calculs de chronologie, de façon à réduire l'incertitude initiale sur la position des lignes isochrones.

Selon la méthode, il est possible d'exploiter les deux chronologies "au plus tôt" et "au plus tard" pour affiner l'interprétation sédimentologique.

### 2- Interprétations des scénarios chronologiques

L'interprétateur peut tirer d'autres informations très riches de ces scénarios chronologiques.

### a) Détermination des zones à forte et faible vitesse de sédimentation

Selon un mode de réalisation de la méthode, on peut calculer un attribut noté D, correspondant à la différence : ***T_{down} - Tᵤₚ***.

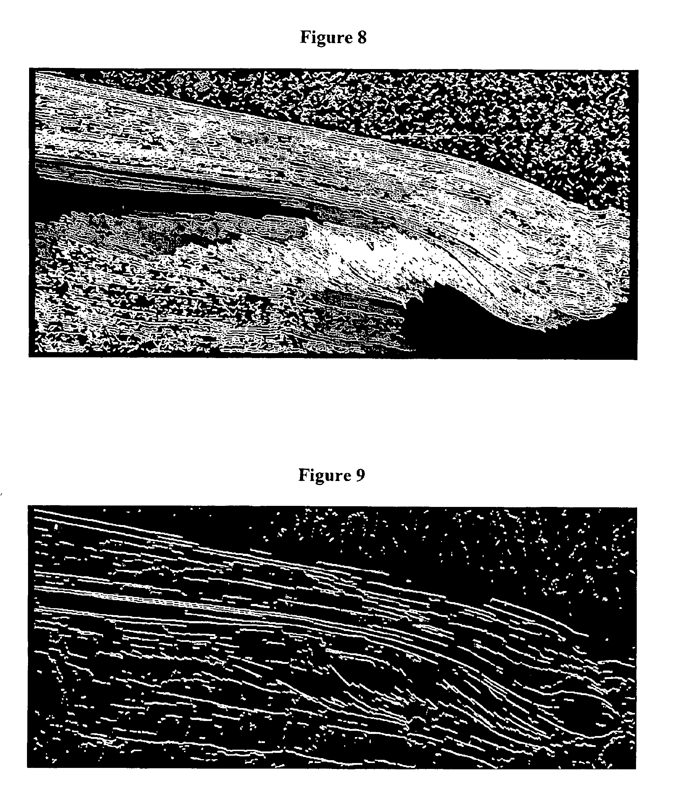

Comme l'illustre la figure 8, à chaque réflecteur est associée une valeur de D. Cette visualisation permet d'afficher l'incertitude sur le positionnement des réflecteurs dans l'échelle chronologique. Elle fait apparaître des groupes de réflecteurs à faible incertitude de positionnement chronostratigraphique (en clair sur la figure 8) et des groupes de réflecteurs à forte incertitude de positionnement chronostratigraphique (en foncé sur la figure 8).

- Les groupes de réflecteurs à faible incertitude de positionnement correspondent aux réflecteurs placés dans les zones à forte vitesse de sédimentation. En effet si l'incertitude est faible cela signifie que ces réflecteurs se situent dans une zone comprenant verticalement un grand nombre de réflecteurs par rapport à d'autres zones déposées durant la même période (c'est-à-dire dans la même gamme de niveaux chronologiques). La présence d'un grand nombre de réflecteurs indique un grand nombre de lignes de dépôt, donc une forte vitesse moyenne de sédimentation. Ces zones présentent un intérêt considérable pour le géologue car elles correspondent souvent aux zones les plus sableuses et donc susceptibles de constituer les meilleurs réservoirs pétroliers.

- Les groupes de réflecteurs à forte incertitude de positionnement représentent des groupes de réflecteurs s'étant déposés à faible vitesse moyenne de sédimentation, ou présentant une lacune due à une érosion de certains réflecteurs. En effet si l'incertitude est forte cela signifie que ces réflecteurs se situent dans une zone comprenant verticalement un faible nombre de réflecteurs par rapport à d'autres zones déposées durant la même période, c'est-à-dire dans la même gamme de niveaux chronologiques. La présence d'un petit nombre de réflecteurs indique un petit nombre de lignes de dépôt, donc une faible vitesse moyenne de sédimentation. Ces lacunes dues à l'érosion sont également d'un intérêt considérable car elles aident l'interprétateur à positionner la limite entre les sédiments déposés en domaine marin (forte vitesse de sédimentation) et le domaine continental (faible vitesse de sédimentation, voire érosion) à un instant donné au cours de l'histoire géologique de la section étudiée. En effet, le domaine marin peu profond se caractérise par des fortes vitesses de sédimentation, le milieu marin profond par de faibles vitesses de sédimentation, et le milieu continental par des faibles vitesses de sédimentation et de l'érosion.

### b) Détermination des interfaces entre corps sédimentaires

Nous venons de voir précédemment que le calcul et l'affichage de l'attribut ***D*** permet d'individualiser à l'oeil des groupes de réflecteurs prenant la même valeur de ***D ;*** ces groupes sont représentatifs en termes de stratigraphie et vont aider l'interprétateur dans sa tâche. Afin de mettre en relief les contours de ces groupes de réflecteurs, c'est-à-dire leur interface avec les autres groupes, on peut calculer l'attribut ***D'*** en tout pixel d'un réflecteur, et défini comme suit : ***D'*** est la différence entre la valeur de D du réflecteur passant par le pixel courant et la valeur de ***D*** du réflecteur placé immédiatement au-dessus (ou en-dessous) du réflecteur courant, au droit du pixel considéré. La valeur prise par cet attribut ***D'*** est représentée sur la figure 9 où l'on voit apparaître clairement ces surfaces caractéristiques, en général associées à des surfaces d'érosion ou des surfaces d'inondation dues aux variations de niveau marin.

### c) Recherche de lignes "isochrones" : position et incertitude

Une des tâches les plus classiques confiée à l'interprétateur est de rechercher des lignes dites "isochrones". Une ligne "isochrone" représente la ligne sur la section sismique de la surface topographique à un instant donné au cours de l'histoire géologique du sous-sol. Dans le cadre de l'hypothèse où la mise en place des sédiments correspond à une chronologie compacte, les valeurs ***Tᵤₚ*** et ***T_{down}*** permettent de déterminer la position de la ligne isochrone pour un niveau chronologique quelconque donné ***Tᵢₛₒ,*** ainsi que la fourchette d'incertitude sur cette position. Ceci est réalisé en affichant les réflecteurs suivant trois codes de couleurs différentes, correspondant aux trois domaines différents définis comme suit :
- tous les réflecteurs dont le niveau chronologique "au plus tôt" est postérieur au niveau recherché (***Tᵤₚ** > **Tᵢₛₒ***) constituent le domaine I.
- tous les réflecteurs dont le niveau chronologique "au plus tard" est antérieur au niveau recherché **(*****T_{down}** <* ***Tᵢₛₒ*)** constituent le domaine II.
- tous les réflecteurs qui peuvent potentiellement s'être déposés au niveau recherché (***Tᵤₚ** < **Tᵢₛₒ** < **T_{down}***) constituent le domaine III.

Le résultat d'une telle codification de couleurs est illustré sur la figure 10. La ligne isochrone recherchée se situe à l'interface des domaines I et II, et traverse le domaine III. Le domaine III représente le domaine d'incertitude sur la position de la ligne isochrone. L'interprétateur peut alors pointer la ligne isochrone dans ce domaine d'incertitude III.

### 3- Extension de l'invention à des images en trois dimensions

De plus en plus souvent, les acquisitions sismiques concernent un volume du sous-sol, au lieu de se limiter à une section verticale. L'image produite se présente alors sous la forme d'un cube de voxels d'origine **O,** comportant ***nZ*** couches (ou pas de discrétisation verticale suivant l'axe des **Z), *nX*** pas de discrétisation horizontale suivant l'axe des **X** et ***nY*** pas de discrétisation horizontale suivant l'axe des **Y.**

Une section verticale de ce cube et parallèle au plan **OXZ** est appelée "inline". Une section verticale du cube et parallèle au plan **OYZ** est appelée "crossline".

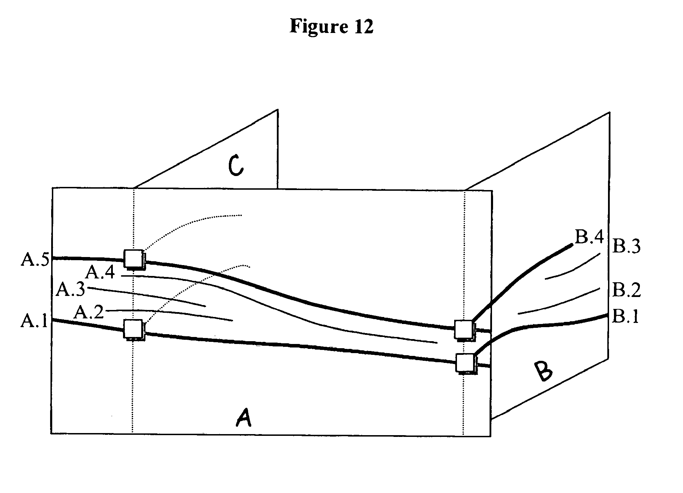

Pour étendre l'invention au cas tridimensionnel, on applique la méthode de vectorisation des réflecteurs à une sélection quelconque d'inlines et de crosslines. L'étape de binarisation et de vectorisation des réflecteurs est réalisée de manière indépendante sur chaque section. On construit ensuite des lignes isochrones en rassemblant les réflecteurs qui se croisent sur les lignes d'intersection entre les sections. Ensuite, le classement chronologique des réflecteurs est réalisé sur l'ensemble des réflecteurs extraits de toutes les sections considérées, en appliquant la technique de forçage par les lignes isochrones ainsi définies. Sur l'exemple de la figure 12, le classement chronologique des réflecteurs est réalisé en tenant compte des deux isochrones formées des réflecteurs A1 et B1, et A5 et B4 respectivement. A représente une inline et B et C représentent deux crosslines. Les carrés blancs représentent les croisements des réflecteurs au niveau des lignes d'intersections entre les inlines et les crosslines.

## Revendications

1. Méthode de reconstitution des conditions de dépôts dans lesquels se sont formées des couches de sédiments, à partir de classements chronologiques de réflecteurs formant des lignes des pixels extraits d'une image représentant des amplitudes de signaux sismiques, **caractérisée en ce que** la méthode comporte les étapes suivantes :
A. on effectue de façon itérative une estimation d'un premier et d'un second scénarios chronologiques de mise en place desdites couches de sédiments, en attribuant à chacun desdits réflecteurs deux numéros de niveau chronologique respectivement ***Tᵤₚ*** et ***T_{down}***, déterminés à partir des étapes suivantes :
a) on attribue un premier numéro initial de niveau chronologique ***Tᵤₚ*** à un premier groupe de réflecteurs, et un second numéro initial de niveau chronologique ***T_{down}*** à un second groupe de réflecteurs ;
b) on attribue un numéro de niveau chronologique ***Tᵤₚ*** = ***Tᵤₚ*** + 1 aux réflecteurs constitués de pixels placés au-dessus desdits réflecteurs dudit premier groupe et au-dessus d'aucun autre réflecteur, ces réflecteurs attribués au niveau ***Tᵤₚ*** + 1 constituants les nouveaux réflecteurs dudit premier groupe ;
c) on attribue un numéro de niveau chronologique ***T_{down}*** = ***T_{down}** -* 1 aux réflecteurs constitués de pixels placés au-dessous desdits réflecteurs dudit second groupe et au-dessous d'aucun autre réflecteur, ces réflecteurs attribués au niveau ***T_{down}** -* 1 constituants les nouveaux réflecteurs dudit second groupe ;
Tup correspond au dépôt de chaque réflecteur le plus tôt possible au cours de la formation du milieu et Tdown est le dépôt de chaque réflecteur le plus tard possible.
d) on réitère à partir de l'étape b), la procédure s'interrompant quand tous les réflecteurs sont attribués à deux niveaux chronologiques.
B. on effectue une interprétation desdits scénarios chronologiques pour reconstituer lesdites conditions de dépôts.

2. Méthode selon la revendication 1, dans laquelle l'estimation d'un scénario chronologique respecte au moins une contrainte additionnelle imposée par un interprétateur.

3. Méthode selon la revendication 2, dans laquelle ladite contrainte est une ligne isochrone particulière, comportant un ensemble de réflecteurs, à attribuer à un même niveau chronologique.

4. Méthode selon l'une des revendications précédentes, dans laquelle on interprète lesdits scénarios chronologiques en définissant des zones de faible et forte vitesses de sédimentation à l'aide d'un attribut *D* défini comme la différence entre lesdits numéros de niveau chronologique *Tᵤₚ* et lesdits numéros de niveau chronologique *T_{down}*, en chaque pixel de ladite image.

5. Méthode selon la revendication 4, dans laquelle on interprète lesdits scénarios chronologiques en définissant les interfaces entre des corps sédimentaires dudit milieu souterrain à l'aide d'un attribut *D*' calculé en tout pixel d'un réflecteur, et défini comme étant la différence entre la valeur de *D* du réflecteur passant par ledit pixel et la valeur de *D* d'un réflecteur placé juste au-dessus ou en-dessous dudit réflecteur, au droit dudit pixel considéré.

6. Méthode selon l'une des revendications précédentes, dans laquelle on interprète lesdits scénarios chronologiques en déterminant une position d'une ligne isochrone pour un niveau chronologique donné numéroté *Tᵢₛₒ*, ainsi qu'une fourchette d'incertitude sur ladite position, en affichant lesdits réflecteurs suivant trois codes de couleurs différentes, correspondant à trois domaines différents définis comme suit :
- tous réflecteurs dont le numéro du niveau chronologique ***Tᵤₚ*** est postérieur au numéro du niveau recherché ***Tᵢₛₒ*** (***Tᵤₚ*** > ***Tᵢₛₒ***) constituent le domaine I ;
- tous réflecteurs dont le numéro du niveau chronologique ***T_{down}*** est antérieur au numéro du niveau recherché ***Tᵢₛₒ*** (***T_{down}*** < ***Tᵢₛₒ***) constituent le domaine II ;
- tous les réflecteurs qui peuvent potentiellement s'être déposés au niveau recherché (***Tᵤₚ*** < ***Tᵢₛₒ*** < ***T_{down}***) constituent le domaine III, qui est le domaine d'incertitude.

7. Méthode selon la revendication 3, dans laquelle ladite image étant en trois dimensions et définie par un premier ensemble de sections et un second ensemble de sections perpendiculaires, l'estimation de scénarios chronologiques comprend les étapes suivantes :
- on définit une sélection de sections dudit premier et dudit second ensemble de sections ;
- on construit des lignes isochrones en rassemblant des réflecteurs qui se croisent sur des lignes d'intersection entre des sections perpendiculaires de ladite sélection ;
- on effectue une estimation desdits scénarios chronologiques sur l'ensemble des réflecteurs extraits de toutes les sections considérées, en respectant comme contrainte lesdites lignes isochrones.

8. Méthode selon l'une des revendications précédentes, dans laquelle l'extraction desdits réflecteurs comporte au moins une fois la succession des étapes suivantes :
- on réalise une transformation de ladite image en une image comportant seulement deux niveaux de couleurs ;
- on effectue une modification de ladite image à deux niveaux de couleurs en transformant des linéations de ladite image en des lignes qui conservent les mêmes relations de voisinage et dont l'épaisseur est celle d'un pixel, à partir d'une opération de morphologie mathématique.
- on construit lesdits réflecteurs en découpant chacune desdites lignes présentant des ramifications à partir d'une technique de vectorisation ;
- on effectue une optimisation de la géométrie desdits réflecteurs.

9. Méthode selon l'une des revendications précédentes, dans laquelle l'optimisation desdits réflecteurs comporte au moins une des étapes suivantes :
a) on sépare des réflecteurs ayant une extrémité commune, et l'on teste deux à deux ces réflecteurs pour sélectionner des couples de réflecteurs dont les orientations à l'extrémité font un angle de 180°, avec un certain seuil de tolérance, par exemple 20°, puis l'on ressoude parmi les couples sélectionnés, le couple qui formera, après soudure, le réflecteur le plus long.
b) on élimine des réflecteurs ayant au moins une des caractéristiques suivantes : une faible longueur par rapport à la longueur moyenne des réflecteurs, une tortuosité supérieure à la tortuosité moyenne, une orientation moyenne proche de la verticale ;
c) on coupe certains réflecteurs pour que chacun d'eux représente une ligne brisée ne présentant ni de point de rebroussement, ni de bifurcation, et ne recoupant aucun autre réflecteur.

## Patentansprüche

1. Verfahren zur Rekonstruktion von Ablagerungsbedingungen, unter denen sich Sedimentschichten gebildet haben, aus chronologischen Klassifizierungen von Reflektoren, die ixellinien bilden, die aus einem Bild extrahiert wurden, das Amplituden von seismischen Signalen darstellt, **dadurch gekennzeichnet, dass** as Verfahren folgende Schritte umfasst:
A. eine iterative Schätzung eines ersten und zweiten chronologischen Szenarios zur Anbringung der Sedimentschichten wird durchgeführt, indem jedem der Reflektoren zwei Nummern der chronologischen Ebene Tᵤₚ bzw. T_{down} zugeordnet werden, die aus den folgenden Schritten ermittelt werden:
a) eine erste Anfangsnummer der chronologischen Ebene Tᵤₚ wird einer ersten Gruppe von Reflektoren zugeordnet und eine zweite Anfangsnummer der chronologischen Ebene T_{down} wird einer zweiten Gruppe von Reflektoren zugeordnet;
b) eine Nummer der chronologischen Ebene *Tᵤₚ* = *Tᵤₚ* + 1 wird den Reflektoren zugewiesen, die aus Pixeln bestehen, die oberhalb der Reflektoren aus der ersten Gruppe und oberhalb keines anderen Reflektors angeordnet sind, wobei die neuen Reflektoren der ersten Gruppe diese der Ebene Tᵤₚ + 1 zugeordneten Reflektoren sind;
c) eine Nummer der chronologischen Ebene T_{down} = T_{down} - 1 wird den Reflektoren zugewiesen, die aus Pixeln bestehen, die unterhalb der Reflektoren aus der zweiten Gruppe und unterhalb keines anderen Reflektors angeordnet sind, wobei die neuen Reflektoren der zweiten Gruppe diese der Ebene T_{down} 1 zugeordneten Reflektoren sind,
wobei Tᵤₚ dem Absetzen jedes Reflektors so früh wie möglich während der edienbildung und T_{down} dem Absetzen jedes Reflektors so spät wie möglich entspricht;
d) die Verfahrensweise wird ab Schritt b) wiederholt, bis alle Reflektoren zwei chronologischen Ebenen zugeordnet worden sind;
B. eine Interpretation der chronologischen Szenarien wird durchgeführt, um die Ablagerungsbedingungen zu rekonstruieren.

2. Verfahren nach Anspruch 1, wobei die Schätzung eines chronologischen Szenarios mindestens eine durch einen Interpreten vorgegebene zusätzliche Einschränkung berücksichtigt.

3. Verfahren nach Anspruch 2, wobei die Einschränkung eine besondere isochrone Linie ist, die eine Mehrzahl von Reflektoren umfasst, die derselben chronologischen Ebene zugewiesen werden müssen.

4. Verfahren nach einem der vorhergehenden Ansprüche, wobei die chronologischen Szenarien interpretiert werden, indem Bereiche mit hoher und schwacher Sedimentationsgeschwindigkeit anhand eines Attributs D definiert werden, das als die Differenz zwischen den Nummern der chronologischen Ebene Tᵤₚ und der chronologischen Ebene Ion jedem Pixel des Bildes definiert wird.

5. Verfahren nach Anspruch 4, wobei die chronologischen Szenarien interpretiert werden, indem die Schnittstellen zwischen den Sedimentkörpern des unterirdischen Mediums unter Verwendung eines Attributs D' definiert werden, das in jedem Pixel eines Reflektors berechnet und als Differenz zwischen dem Wert von D des Reflektors, der das Pixel durchläuft, und dem Wert von D eines Reflektors definiert wird, der unmittelbar oberhalb oder unterhalb des genannten Reflektors bei dem betroffenen Pixel angeordnet ist.

6. Verfahren nach einem der vorhergehenden Ansprüche, wobei die chronologischen Szenarien interpretiert werden, indem eine Position einer isochronen Linie für eine gegebene nummerierte chronologische Ebene T_{down} sowie ein Unsicherheitsbereich an dieser Position ermittelt werden, wobei die Reflektoren nach drei unterschiedlichen Farbcodes angezeigt werden, die drei verschiedenen, wie folgt definierten Bereichen entsprechen:
- alle Reflektoren, deren Nummer der chronologischen Ebene Tᵤₚ nach der Nummer der gesuchten Ebene Tᵢₛₒ (Tᵤₚ > Tᵢₛₒ) liegt, bilden den Bereich I;
- alle Reflektoren, deren Nummer der chronologischen Ebene T_{down} vor der Nummer der gesuchten Ebene Tᵢₛₒ (T_{down} < Tᵢₛₒ) liegt, bilden den Bereich II;
- alle Reflektoren, die sich potenziell auf die gesuchte Ebene (Tᵤₚ <Tᵢₛₒ <T_{down}) abgesetzt haben können, bilden den Bereich III, welcher der Unsicherheitsbereich ist.

7. Verfahren nach Anspruch 3, wobei, wenn das Bild dreidimensional und durch eine erste Gruppe von Schnitten und eine zweite Gruppe von Schnitten, die zueinander senkrecht sind, definiert ist, die Schätzung der chronologischen Szenarien folgende Schritte umfasst:
- es wird eine Auswahl von Schnitten der ersten und zweiten Gruppe von Schnitten definiert;
- isochrone Linien werden gebildet, indem Reflektoren zusammengefasst werden, die sich auf Schnittlinien zwischen senkrechten Schnitten der Auswahl kreuzen;
- eine Schätzung der chronologischen Szenarien wird über die gesamten Reflektoren durchgeführt, die aus allen betrachteten Schnitten unter Beachtung der isochronen Linien als Einschränkung extrahiert wurden.

8. Verfahren nach einem der vorhergehenden Ansprüche, wobei die Extraktion der Reflektoren mindestens einmal die Folge der folgenden Schritte umfasst:
- eine Umwandlung des Bildes in ein Bild mit nur zwei Farbenebenen wird durchgeführt;
- eine Veränderung des Bildes mit zwei Farbebenen wird durchgeführt, indem Lineationen des Bildes ausgehend von einer mathematischen Morphologie-Operation in Linien umgewandelt werden, die die gleichen achbarschaftsbeziehungen beibehalten und deren Dicke einem Pixel entspricht;
- Reflektoren werden erzeugt, indem jede Verzweigungen aufweisende Linie nach einer Vektorisierungstechnik zerschnitten wird;
- eine Optimierung der Geometrie der Reflektoren wird durchgeführt.

9. Verfahren nach einem der vorhergehenden Ansprüche, wobei die Optimierung der Reflektoren mindestens einen der folgenden Schritte umfasst:
a) die Reflektoren mit einem gemeinsamen Ende werden getrennt und paarweise getestet, um eflektorenpaare auszuwählen, deren Orientierungen an diesem Ende einen Winkel von 180° bilden, mit einer gewissen Toleranzschwelle, beispielsweise 20°, anschließend wird aus den ausgewählten Paaren das Paar wieder zusammengeschweißt, das nach der Verschweißung den längsten Reflektor bildet.
b) Reflektoren, die mindestens eines der folgenden Merkmale aufweisen, werden entfernt: eine geringe Länge im Vergleich zu der durchschnittlichen Länge der Reflektoren, eine höhere Tortuosität als die durchschnittliche Tortuositäteine annähernd senkrechte durchschnittliche Orientierung;
c) einige Reflektoren werden derart abgeschnitten, dass jeder eine gebrochene Linie darstellt, die weder Umkehrpunkte noch Verzweigungen aufweist und die keinen anderen Reflektor schneidet.

## Claims

1. A method of reconstructing depositional conditions under which sedimentary layers have formed, from chronological classifications of reflectors forming lines of pixels extracted from an image representing seismic signal amplitudes, **characterized in that** the method comprises the following stages:
A. Iteratively carrying out an estimation of a first and of a second chronological scenario of the deposition of said sedimentary layers, by assigning to each one of said reflectors two chronological level numbers, Tᵤₚ and T_{down} respectively, determined from the following stages:
a) assigning an initial first chronological level number Tᵤₚ to a first group of reflectors, and an initial second chronological level number T_{down} to a second group of reflectors;
b) assigning a chronological level number Tᵤₚ = Tᵤₚ + 1 to the reflectors consisting of pixels located above said reflectors of said first group and above no other reflector, these reflectors assigned to level Tᵤₚ + 1 making up the new reflectors of said first group;
c) assigning a chronological level number T_{down} = T_{down} - 1 to the reflectors consisting of pixels located below said reflectors of said second group and below no other reflector, these reflectors assigned to level T_{down} - 1 making up the new reflectors of said second group;
Tᵤₚ corresponds to the deposition of each reflector as early as possible during the formation of the medium and T_{down} is the deposition of each reflector as late as possible;
d) starting again from stage b), and the procedure stops when all the reflectors are assigned to two chronological levels.
B. Performing an interpretation of said chronological scenarios so as to reconstruct said depositional conditions.

2. A method as claimed in claim 1, wherein estimation of a chronological scenario respects at least one additional constraint imposed by an interpreter.

3. A method as claimed in claim 2, wherein said constraint is a particular isochrone comprising a set of reflectors to be assigned to the same chronological level.

4. A method as claimed in any one of the previous claims, wherein said chronological scenarios are interpreted by defining zones of low and of high rate of sedimentation by means of an attribute D defined as the difference between said chronological level numbers Tᵤₚ and said chronological level numbers T_{down}, at each pixel of said image.

5. A method as claimed in claim 4, wherein said chronological scenarios are interpreted by defining the interfaces between sedimentary bodies of said underground medium by means of an attribute D' calculated at any pixel of a reflector, and defined as the difference between the value of D of a reflector passing through said pixel and the value of D of a reflector located just above or below said reflector, in line with said pixel considered.

6. A method as claimed in any one of the previous claims, wherein said chronological scenarios are interpreted by determining a position of an isochrone for a given chronological level numbered Tᵢₛₒ, as well as an uncertainty range for said position, by displaying said reflectors according to three different colour codes corresponding to three different domains defined as follows:
- all the reflectors whose chronological level number Tᵤₚ is subsequent to the level number sought Tᵢₛₒ (Tᵤₚ > Tᵢₛₒ) make up domain I;
- all the reflectors whose chronological level number T_{down} is prior to the level number sought Tᵢₛₒ (T_{down} < Tᵢₛₒ) make up domain II;
- all the reflectors that may have potentially settled at the level sought (Tᵤₚ < Tᵢₛₒ < T_{down}) make up domain III, which is the uncertainty domain.

7. A method as claimed in claim 3 wherein, said image being in three dimensions and defined by a first set of sections and a second set of perpendicular sections, estimation of chronological scenarios comprises the following stages:
- defining a selection of sections of said first and of said second set of sections,
- constructing isochrones by assembling reflectors that intersect on intersection lines between perpendicular sections of said selection,
- carrying out an estimation of said chronological scenarios for all of the reflectors extracted from all the sections considered, by respecting as the constraint said isochrones.

8. A method as claimed in any one of the previous claims, wherein extraction of said reflectors comprises at least once the succession of stages as follows:
- carrying out a transformation of said image into an image comprising only two colour levels;
- making a change in said image with two colour levels by transforming lineations of said image into lines that keep the same neighbourhood relations and whose thickness is that of a pixel, from a mathematical morphology operation;
- constructing said reflectors by splitting up each one of said lines having ramifications from a vectorization technique;
- carrying out an optimization of the geometry of said reflectors.

9. A method as claimed in any one of the previous claims, wherein optimization of said reflectors comprises at least one of the following stages:
a) separating reflectors having a common end and testing two by two these reflectors so as to select reflector pairs whose orientations at the end form an angle of 180°, with a certain tolerance threshold, 20° for example, then reuniting, among the pairs selected, the pair that will form, after welding , the longest reflector;
b) eliminating reflectors having at least one of the following characteristics: short length in relation to the average length of the reflectors, greater tortuosity than the average tortuosity, average orientation close to the vertical;
c) splitting up some reflectors so that each one represents a broken line having no cusp and no bifurcation, and intersecting no other reflector.
